# EUROPEAN PATENT APPLICATION

(11) **EP 4 843 932 A1**
(43) Date of publication of application: **25.11.2026**
(21) Application number: 24918036.5
(22) Date of filing: 21.08.2024
(51) Int. Cl.: B65G 47/52

(54) **SWITCHING AND CONVEYING DEVICE AND PRODUCTION LINE**

(30) Priority: 18.01.2024 CN 202410071370
(71) Applicant: Contemporary Amperex Technology Co., Limited, Ningde, Fujian 352100 (CN)
(72) Inventor: YANG, Xielin, Ningde, Fujian 352100 (CN); GUAN, Feng, Ningde, Fujian 352100 (CN); LIAO, Hongyan, Ningde, Fujian 352100 (CN)
(74) Representative: Gong, Jinping
(86) International application number: PCT/CN2024/113719
(87) International publication number: WO 2025/152426

(57) **Abstract**

A changeover conveying device and a production line are provided. The changeover conveying device includes a frame (11), a drive source, and a changeover table (12). The changeover table (12) is disposed on the frame (11). The changeover table (12) includes a drive mechanism (121), a support base (123), and a plurality of conveying mechanisms (122). The drive mechanism (121) and the conveying mechanisms (122) are all disposed on the support base (123). The plurality of conveying mechanisms (122) are arranged along a first direction. The drive mechanism (121) includes a reversing component (1211) and a power motor (1212) with a power shaft. The reversing component (1211) is connected to the power shaft and the conveying mechanisms (122). The power shaft rotates to enable the reversing component (1211) to drive the conveying mechanisms (122) to move along the first direction. The conveying mechanisms (122) move along the first direction to change a distance between two adjacent conveying mechanisms (122) along the first direction. The drive source is connected to the support base (123) to drive the changeover table (12) to move along the first direction. One power motor can drive all conveying mechanisms (122) to translate, allowing the distance between the two adjacent conveying mechanisms (122) to be changed conveniently, thereby meeting the conveying requirements for battery cells of different models.

## Description

### CROSS-REFERENCE TO RELATED APPLICATIONS

This disclosure claims priority to Chinese Patent Application No. 202410071370.8, filed on January 18, 2024 and titled "CHANGEOVER CONVEYING DEVICE AND PRODUCTION LINE", which is incorporated herein by reference in its entirety.

### TECHNICAL FIELD

This disclosure relates to the field of battery technology, and in particular, to a changeover conveying device and a production line.

### BACKGROUND

Batteries are increasingly widely used in daily life and production. For example, new energy vehicles equipped with batteries have been extensively adopted, where batteries can provide all or part of the power for new energy vehicles. Additionally, batteries are also increasingly applied in fields such as energy storage.

During the battery production process, it is necessary to use a conveying device to transport batteries or battery cells from one workstation to another workstation. In the related art, batteries or battery cells of different models have different sizes, and one single conveying device is typically difficult to meet the conveying requirements of batteries or battery cells of different models.

### SUMMARY

In view of this, embodiments of this disclosure are intended to provide a changeover conveying device and a production line, capable of conveying batteries or battery cells of different models.

To achieve the above objective, the technical solutions of the embodiments of this disclosure are implemented as follows:

According to one aspect, an embodiment of this disclosure provides a changeover conveying device including:
a frame;
a changeover table disposed on the frame, where the changeover table includes a drive mechanism, a support base, and a plurality of conveying mechanisms; the drive mechanism and the conveying mechanisms are all disposed on the support base; each conveying mechanism is configured to convey a row of items; the plurality of conveying mechanisms are arranged along a first direction; the drive mechanism includes a reversing component and a power motor with a power shaft; the reversing component is connected to the power shaft and the conveying mechanisms; the power shaft rotates to enable the reversing component to drive the conveying mechanisms to move along the first direction; and the conveying mechanisms move along the first direction to change a distance between two adjacent conveying mechanisms along the first direction; where the first direction, the vertical direction, and the conveying direction are perpendicular to each other; and
a drive source connected to the support base to drive the changeover table to move along the first direction.

In the changeover conveying device provided by this embodiment of this disclosure, the reversing component is configured to convert the rotation of the power shaft into translational movement of the conveying mechanisms along the first direction. The reversing component achieves the changeover of movement modes. The reversing component is connected to the power shaft and the conveying mechanisms, such that one power motor can drive all conveying mechanisms to translate. This can not only reduce power motors and costs but also allow the distance between the two adjacent conveying mechanisms to be changed conveniently, enabling convenient model changeover for battery cells, and meeting the conveying requirements for battery cells of different models. The power motor is used to provide a driving force, allowing for more accurate control of movement distances of the conveying mechanisms along the first direction, featuring high precision and simple operation, and effectively improving the production efficiency. The support base is configured to support the drive mechanism and the conveying mechanisms. The drive source can drive the support base to move the drive mechanism and the conveying mechanisms simultaneously along the first direction by a same distance.

In some embodiments, the reversing component includes a lead screw and a plurality of nuts, where the lead screw is connected to the power shaft; each nut is connected to one conveying mechanism; and the lead screw is threadedly engaged with the nuts.

In these embodiments, the lead screw rotates to drive the nuts to move the corresponding connected conveying mechanisms along the first direction. By adopting the form of the lead screw and the nuts, the power motor can drive the conveying mechanisms to perform reciprocating linear motion along the first direction efficiently and stably.

In some embodiments, at least two nuts have opposite thread directions.

In these embodiments, two nuts have opposite thread directions, so that the two nuts move along two opposite sides in the first direction, driving at least two conveying mechanisms to move along the two opposite sides in the first direction. This allows movement directions of the corresponding conveying mechanisms connected to the nuts to be changed by changing the thread directions of the nuts, thereby enabling one lead screw to drive a plurality of conveying mechanisms to move toward or away from each other along the first direction.

In some embodiments, the lead screw is located below the conveying mechanism.

In these embodiments, the lead screw can be prevented from interfering with the movement of battery cells above the conveying mechanism.

In some embodiments, the power motor is located on a side of the conveying mechanism along the first direction.

In these embodiments, the power motor may not occupy space along the vertical direction of the changeover conveying device, thereby avoiding an increase in an overall height of the changeover conveying device.

In some embodiments, the conveying mechanism includes:
a base;
a changeover conveying belt;
a first shaft inserted into an annular space of the changeover conveying belt;
a second shaft inserted into the annular space of the changeover conveying belt, where the first shaft and the second shaft are respectively located at both ends of the changeover conveying belt along the conveying direction; and
two support seats disposed on the base, where the two support seats are respectively located on both sides of the changeover conveying belt along the first direction; a shaft end of the first shaft is detachably connected to the support seat; and a shaft end of the second shaft is detachably connected to the support seat.

In these embodiments, the changeover conveying belt can be easily disassembled by removing the first shaft and the second shaft without the need to remove the support seat from the base, thereby reducing the difficulty of maintenance and replacement of the changeover conveying belt.

In some embodiments, the support seat includes a seat body and a cover body detachably connected; the seat body and the cover body together define a mounting hole; and the shaft end of the first shaft is accommodated within the mounting hole.

In these embodiments, the seat body and cover body are separate structures. When the first shaft needs to be removed, the cover body can be removed from the seat body, that is, the first shaft can be taken out. The operation is simple and convenient.

In some embodiments, the support seat is formed with a placement slot and an entry/exit slot, where the placement slot extends along the conveying direction; the entry/exit slot extends upward from the placement slot and runs through an upper end surface of the support seat; and the shaft end of the second shaft is accommodated within the placement slot.

In these embodiments, a wall surface of the placement slot restricts the shaft end of the second shaft from escaping the placement slot, allowing the shaft end of the second shaft to be detachably connected to the support seat. When the second shaft needs to be removed, the shaft end of the second shaft can be taken out through an upward opening of the entry/exit slot. When the shaft end of the second shaft needs to be assembled to the support seat, the shaft end of the second shaft can be placed into the placement slot through the upward opening of the entry/exit slot. The operation is simple and convenient.

In some embodiments, the conveying mechanism includes a support plate disposed horizontally, where the support plate is inserted into the annular space of the changeover conveying belt; a portion of the support plate protrudes from the changeover conveying belt along the first direction to form a connection portion; and a fastener is detachably inserted into the connection portion and the base along the vertical direction.

In these embodiments, the support plate supports the changeover conveying belt. The support plate is detachably connected to the base via the fastener, allowing the fastener to be removed from the vertical direction when the changeover conveying belt needs to be disassembled, avoiding interference from other structures. The operation is convenient. The support plate is first removed and taken out from the annular space, then the first shaft and the second shaft are removed, and the changeover conveying belt is finally taken out from the first shaft and the second shaft, preventing the support plate from interfering with the quick assembly and disassembly of the changeover conveying belt.

In some embodiments, the drive source is a linear motor.

In these embodiments, the linear motor can drive the changeover table to perform linear reciprocating motion along the first direction, efficiently and reliably changing the position of the changeover table along the first direction, thereby adjusting the positions of all conveying mechanisms in the first direction. The linear motor has the characteristics such as high movement precision and high operation efficiency. A controller can be configured to control the linear motor to operate and drive the changeover table to move to a set position, achieving a high degree of automation.

According to another aspect, an embodiment of this disclosure provides a production line for producing batteries, including the changeover conveying device according to any one of the above embodiments.

In some embodiments, the production line includes:
a first conveying device including at least one first conveying channel; and
a second conveying device including a plurality of second conveying channels, where the number of first conveying channels is less than the number of second conveying channels; and the first conveying device and the second conveying device are respectively located upstream and downstream of the changeover conveying device.

In this embodiment, both the first conveying channel and the second conveying channel are configured to hold and convey battery cells. Each first conveying channel corresponds to one row of battery cells. Each second conveying channel corresponds to one row of battery cells. During the production process, the battery cells may sequentially pass through the first conveying device, the changeover conveying device, and the second conveying device; alternatively, the battery cells may sequentially pass through the second conveying device, the changeover conveying device, and the first conveying device. The number of first conveying channels is less than the number of second conveying channels, that is, the number of rows of battery cells conveyed by the first conveying device is less than the number of rows of battery cells conveyed by the second conveying device. The changeover conveying device enables matching of the number of rows of battery cells upstream and downstream, improving the production efficiency.

### BRIEF DESCRIPTION OF DRAWINGS

FIG. 1 is a schematic structural diagram of a changeover conveying device according to an embodiment of this disclosure;
FIG. 2 is a schematic structural diagram of a changeover table according to an embodiment of this disclosure;
FIG. 3 is an enlarged schematic diagram of portion A in FIG. 2;
FIG. 4 is a schematic structural diagram of the changeover table shown in FIG. 2 from another perspective;
FIG. 5 is an enlarged schematic diagram of portion B in FIG. 4;
FIG. 6 is an enlarged schematic diagram of portion C in FIG. 4; and
FIG. 7 is a schematic structural diagram of a production line according to an embodiment of this disclosure.

Description of reference signs:
changeover conveying device 1; frame 11; changeover table 12; drive mechanism 121; reversing component 1211; lead screw 12111; nut 12112; power motor 1212; conveying mechanism 122; base 1221; changeover conveying belt 1222; first shaft 1223; second shaft 1224; support seat 1225; seat body 12251; cover body 12252; mounting hole 1225a; placement slot 1225b; entry/exit slot 1225c; support plate 1226; connection portion 12261; mounting slot 12261a; support base 123; drive source 13; first conveying device 2; first conveying channel 21; second conveying device 3; and second conveying channel 31.

### DESCRIPTION OF EMBODIMENTS

The embodiments of the technical solutions of this disclosure will be described in detail below with reference to the accompanying drawings. The following embodiments are only used to illustrate the technical solutions of this disclosure more clearly and are therefore merely examples, which do not constitute any limitations on the protection scope of this application.

Unless otherwise defined, all technical and scientific terms used herein have the same meaning as commonly understood by those skilled in the art of this disclosure. The terms used in this specification of this application are merely intended to describe specific embodiments, but not to limit this application.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated.

Reference to "embodiment" in the specification means that specific features, structures, or characteristics described with reference to an embodiment may be included in at least one embodiment of this application. The word "embodiment" appearing in various places in this specification does not necessarily refer to the embodiment or an independent or alternative embodiment that is exclusive of other embodiments. Those skilled in the art explicitly and implicitly understand that the embodiments described herein may be combined with other embodiments.

A changeover conveying device 1 and a production line provided by embodiments of this disclosure are used for conveying items. The items include but not limited to batteries and/or battery cells.

The batteries provided by the embodiments of this disclosure may be used alone. A plurality of batteries may also be grouped to form a battery pack. Batteries and battery packs may be used in, but are not limited to, electric apparatuses. The electric apparatuses include but are not limited to mobile phones, tablets, laptops, electric toys, electric tools, vehicles, ships, or spacecraft. Spacecraft may include airplanes, rockets, space shuttles, and spaceships.

In an example where an electric apparatus according to an embodiment of this disclosure is a vehicle, the vehicle may be a fuel vehicle, a gas vehicle, or a new energy vehicle, where the new energy vehicle may be a battery electric vehicle, a hybrid vehicle, or an extended-range vehicle. A battery is provided inside the vehicle, and the battery may be disposed at the bottom, front, or rear of the vehicle. The battery may be configured to supply power to the vehicle. For example, the battery may serve as an operating power source of the vehicle. In some embodiments, the battery may serve not only as the operating power source of the vehicle but also as a driving power source of the vehicle, replacing or partially replacing fuel or natural gas to provide driving traction for the vehicle.

The battery may be a lithium-ion battery, a sodium-lithium-ion battery, a lithium-metal battery, a lithium-sulfur battery, or the like. This is not limited in the embodiments of this disclosure.

The battery includes at least one battery cell. The battery cell is an energy storage component of the battery. The battery further includes a battery monitoring and management apparatus for monitoring the charge level of the battery cell.

In the battery, there may be a plurality of battery cells. The plurality of battery cells may be connected in series, parallel, or series-parallel. Being connected in series-parallel means a combination of series and parallel connections of the battery cells. The plurality of battery cells may be directly connected in series, parallel, or series-parallel. Certainly, the battery may be formed by a plurality of battery cells being connected in series, parallel or series-parallel first to form a battery module and then a plurality of battery modules being connected in series, parallel or series-parallel to form an entirety.

In the embodiments of this disclosure, the battery cell may be a secondary battery cell. The secondary battery cell refers to a battery cell that can be recharged to activate an active material for continued use after discharge.

The battery cell may be a cylindrical battery cell, a prismatic battery cell, or a battery cell of another shape. The prismatic battery cell includes a square-shell battery cell or a multi-prismatic battery cell. The prismatic battery cell is, for example, a hexagonal prismatic battery cell. This is not particularly limited in this disclosure.

For example, the battery cell includes a casing, an electrode assembly, and an electrolyte. The electrode assembly and the electrolyte are placed within the casing. The casing is configured to encapsulate components such as the electrode assembly and the electrolyte.

For ease of description, the changeover conveying device 1 and the production line provided by the embodiments of this disclosure are described below using a battery cell as an example.

During the production process, a plurality of rows of battery cells arranged along a first direction typically need to be synchronously conveyed. Battery cells of different models may have different sizes, leading to different spacings between adjacent rows of battery cells. A conveying device in the related art is generally only capable of conveying two rows of battery cells with fixed spacings. When the model changeover for the battery cells is required, the conveying device in the related art is difficult to adapt to the battery cells after model changeover, resulting in inconvenient model changeover for the battery cells during the production process.

It should be noted that a plurality of battery cells arranged along a conveying direction form one row of battery cells, and a plurality of rows of battery cells are spaced apart along a first direction, where the first direction, a vertical direction, and a conveying direction are perpendicular to each other.

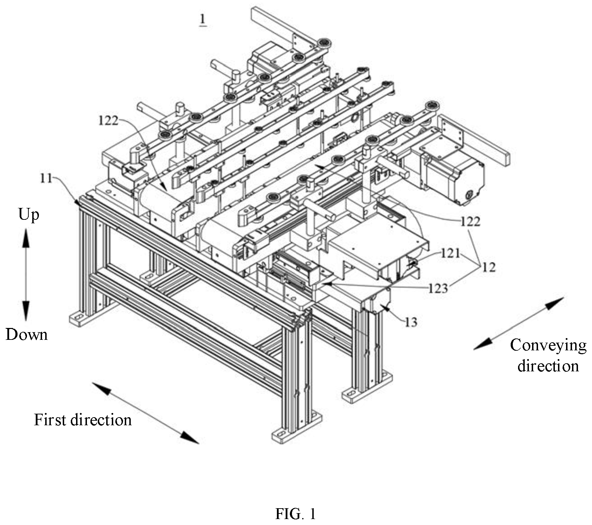

Referring to FIG. 1 to FIG. 4, an embodiment of this disclosure provides a changeover conveying device 1. The changeover conveying device 1 includes a frame 11, a changeover table 12, and a drive source 13. The changeover table 12 is disposed on the frame 11. The frame 11 provides support for the changeover table 12.

Still referring to FIG. 1 to FIG. 4, the changeover table 12 includes a drive mechanism 121, a plurality of conveying mechanisms 122, and a support base 123. The drive mechanism 121 and the conveying mechanisms 122 are all disposed on the support base 123. Each conveying mechanism 122 is configured to convey one row of items. The plurality of conveying mechanisms 122 are arranged along a first direction. The conveying mechanisms 122 are configured to convey battery cells along a conveying direction from one workstation to another workstation. Each conveying mechanism 122 can convey one row of battery cells, where a plurality of battery cells arranged along the conveying direction form one row of battery cells. The plurality of conveying mechanisms 122 can convey a plurality of rows of battery cells. The plurality of conveying mechanisms 122 are arranged in parallel along the first direction, facilitating synchronous movement along the conveying direction of the plurality of rows of battery cells conveyed by the plurality of conveying mechanisms 122.

The drive mechanism 121 includes a reversing component 1211 and a power motor 1212 with a power shaft. The reversing component 1211 is connected to the power shaft and the conveying mechanisms 122. The power shaft rotates to enable the reversing component 1211 to drive the conveying mechanisms 122 to move along the first direction.

For example, the conveying mechanisms 122 move along the first direction to change a distance between two adjacent conveying mechanisms 122 along the first direction. This allows for adjustment of distances between battery cells on the conveying mechanisms 122 along the first direction, facilitating the conveyance of battery cells of different models.

In an embodiment, referring to FIG. 1 to FIG. 4, the drive source 13 is connected to the support base 123 to drive the changeover table 12 to move along the first direction.

In the changeover conveying device 1 provided by this embodiment of this disclosure, the reversing component 1211 is configured to convert the rotation of the power shaft into translational movement of the conveying mechanisms 122 along the first direction. The reversing component 1211 achieves the changeover of movement modes. The reversing component 1211 is connected to the power shaft and the conveying mechanisms 122, such that one power motor 1212 can drive all conveying mechanisms 122 to translate. This can not only reduce power motors 1212 and costs but also allow the distance between the two adjacent conveying mechanisms 122 to be changed conveniently, enabling convenient model changeover for battery cells, and meeting the conveying requirements for battery cells of different models. The power motor 1212 is used to provide a driving force, allowing for more accurate control of movement distances of the conveying mechanisms 122 along the first direction, featuring high precision and simple operation, and effectively improving the production efficiency. The support base 123 is configured to support the drive mechanism 121 and the conveying mechanisms 122. The drive source 13 can drive the support base 123 to move the drive mechanism 121 and the conveying mechanisms 122 simultaneously along the first direction by a same distance.

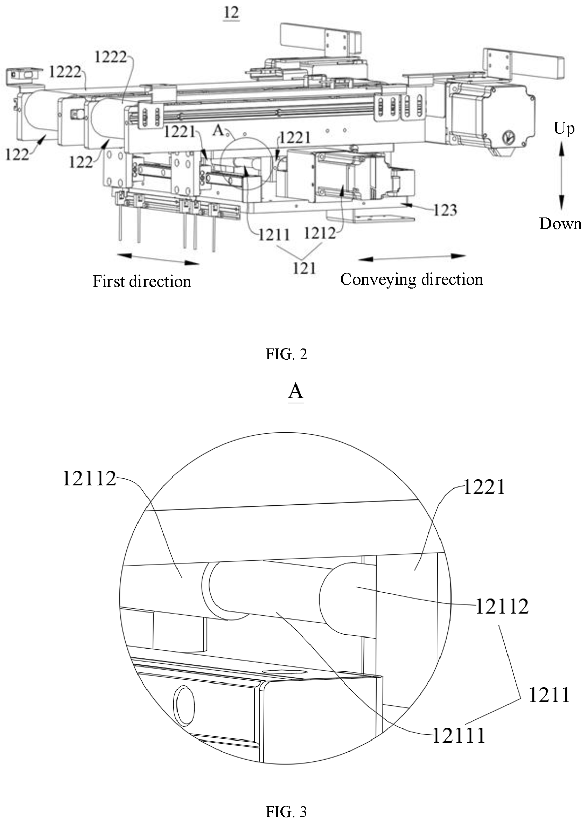

In an embodiment, referring to FIG. 1 and FIG. 2, two conveying mechanisms 122 are provided. The power shaft rotates to enable the reversing component 1211 to drive the two conveying mechanisms 122 to move toward or away from each other along the first direction. For example, when the power shaft rotates in a forward direction, the two conveying mechanisms 122 move toward each other along the first direction. In this way, a distance between the two conveying mechanisms 122 is reduced. When the power shaft rotates in a reverse direction, the two conveying mechanisms 122 move away from each other along the first direction. In this way, the distance between the two conveying mechanisms 122 is increased. The two conveying mechanisms 122 convey two rows of battery cells. The two conveying mechanisms 122 move toward each other such that the two rows of battery cells move toward each other. The two conveying mechanisms 122 move away from each other such that the two rows of battery cells move away from each other.

It should be noted that the forward direction and the reverse direction are two opposite directions. For example, if the forward direction is a clockwise direction, the reverse direction is a counterclockwise direction. For another example, if the reverse direction is a clockwise direction, the forward direction is a counterclockwise direction.

In some embodiments, the power motor 1212 may be a servo motor.

An embodiment of this disclosure further provides a production line for producing batteries, where the production line includes the changeover conveying device 1 according to any one of the embodiments of this disclosure.

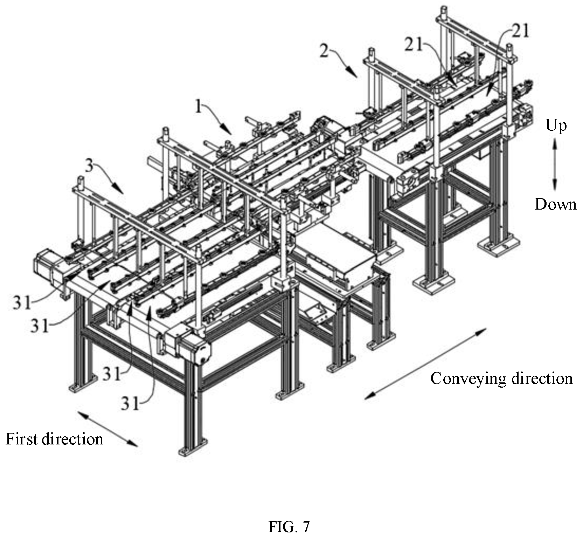

In an embodiment, referring to FIG. 1 and FIG. 7, the production line includes a first conveying device 2 and a second conveying device 3. The first conveying device 2 includes at least one first conveying channel 21. The second conveying device 3 includes a plurality of second conveying channels 31. The number of first conveying channels 21 is less than the number of second conveying channels 31. The first conveying device 2 and the second conveying device 3 are respectively located upstream and downstream of the changeover conveying device 1.

In this embodiment, both the first conveying channel 21 and the second conveying channel 31 are configured to hold and convey battery cells. Each first conveying channel 21 corresponds to one row of battery cells. Each second conveying channel 31 corresponds to one row of battery cells. During the production process, battery cells may sequentially pass through the first conveying device 2, the changeover conveying device 1, and the second conveying device 3. Alternatively, the battery cells may sequentially pass through the second conveying device 3, the changeover conveying device 1, and the first conveying device 2. The number of first conveying channels 21 is less than the number of second conveying channels 31, that is, the number of rows of battery cells conveyed by the first conveying device 2 is less than the number of rows of battery cells conveyed by the second conveying device 3. The changeover conveying device 1 enables matching of the number of rows of battery cells upstream and downstream, improving the production efficiency.

In an embodiment, referring to FIG. 2 and FIG. 3, the reversing component 1211 includes a lead screw 12111 and a plurality of nuts 12112. The lead screw 12111 is connected to the power shaft. Each nut 12112 is connected to one conveying mechanism 122. The lead screw 12111 is threadedly engaged with the nuts 12112. The lead screw 12111 rotates to drive the nuts 12112 to move the corresponding connected conveying mechanisms 122 along the first direction. By adopting the form of the lead screw 12111 and the nuts 12112, the power motor 1212 can drive the conveying mechanisms 122 to perform reciprocating linear motion along the first direction efficiently and stably.

In an embodiment, at least two nuts 12112 have opposite thread directions. For example, in some embodiments, two adjacent nuts 12112 along the first direction have opposite thread directions. Two nuts 12112 have opposite thread directions, so that the two nuts 12112 move along two opposite sides in the first direction, driving at least two conveying mechanisms 122 to move along the two opposite sides in the first direction. This allows movement directions of the corresponding conveying mechanisms 122 connected to the nuts 12112 to be changed by changing the thread directions of the nuts 12112, thereby enabling one lead screw 12111 to drive a plurality of conveying mechanisms 122 to move toward or away from each other along the first direction.

For example, in an embodiment, the lead screw 12111 includes a plurality of rod segments sequentially connected along the first direction. Each rod segment is formed with an external thread adapted to one nut 12112. The at least two nuts 12112 have opposite thread directions, so that at least two rod segments have opposite external thread directions.

In some embodiments, the plurality of rod segments may be integrally formed to form the lead screw 12111. That is, the lead screw 12111 may be an integrally formed structure. A plurality of external threads with different thread directions may be formed on the integrally formed lead screw 12111. In some other embodiments, the plurality of rod segments may be welded to form the lead screw 12111. This allows the rod segments to be manufactured independently.

In an embodiment, referring to FIG. 2 and FIG. 3, the lead screw 12111 is located below the conveying mechanism 122. This design can prevent the lead screw 12111 from interfering with the movement of battery cells above the conveying mechanism 122.

The specific type of the lead screw 12111 is not limited. The lead screw 12111 may be a ball screw.

In an embodiment, referring to FIG. 2 to FIG. 4, the power motor 1212 is located on a side of the conveying mechanism 122 along the first direction. For example, the nuts 12112 are disposed at a bottom of the conveying mechanism 122. The lead screw 12111 can extend along the first direction and sequentially pass through all the nuts 12112. One end of the lead screw 12111 along the first direction is connected to the power shaft. In this way, the power motor 1212 may not occupy space of the changeover conveying device 1 along a vertical direction, avoiding an increase in an overall height of the changeover conveying device 1.

In an embodiment, referring to FIG. 2 to FIG. 6, the conveying mechanism 122 includes a base 1221, a changeover conveying belt 1222, a first shaft 1223, a second shaft 1224, and two support seats 1225. For example, the nut 12112 is connected to the base 1221. For example, the nut 12112 is disposed at a bottom of the base 1221.

The changeover conveying belt 1222 has an annular structure. An internal space enclosed by the changeover conveying belt 1222 is an annular space. The changeover conveying belt 1222 is configured to place battery cells and drive the battery cells to move along the conveying direction.

The first shaft 1223 is inserted into the annular space of the changeover conveying belt 1222. The second shaft 1224 is inserted into the annular space of the changeover conveying belt 1222. The first shaft 1223 and the second shaft 1224 are respectively located at both ends of the changeover conveying belt 1222 along the conveying direction. The first shaft 1223 and the second shaft 1224 drive the changeover conveying belt 1222 to rotate, enabling battery cells on the changeover conveying belt 1222 to move from one workstation to another workstation along the conveying direction.

The two support seats 1225 are disposed on the base 1221. The two support seats 1225 are respectively located on both sides of the changeover conveying belt 1222 along the first direction. A shaft end of the first shaft 1223 is detachably connected to the support seat 1225. A shaft end of the second shaft 1224 is detachably connected to the support seat 1225.

In this embodiment, when the changeover conveying belt 1222 needs to be maintained and replaced, both the first shaft 1223 and the second shaft 1224 can be removed from the support seats 1225, and the changeover conveying belt 1222 can be disassembled from the first shaft 1223 and the second shaft 1224, completing the removal of the changeover conveying belt 1222. When the changeover conveying belt 1222 needs to be assembled to the base 1221, the first shaft 1223 and the second shaft 1224 can be inserted into the annular space, and both the first shaft 1223 and the second shaft 1224 can be assembled onto the support seats 1225, completing the assembly of the changeover conveying belt 1222. This eliminates the need to remove the support seats 1225 from the base 1221, allowing convenient removal of the changeover conveying belt 1222 by removing the first shaft 1223 and the second shaft 1224, and reducing the difficulty of maintenance and replacement of the changeover conveying belt 1222.

The shape of the annular space defined by the changeover conveying belt 1222 is not limited. For example, with a plane perpendicular to the first direction as a projection plane, a projection shape of the annular space defined by the changeover conveying belt 1222 is oval.

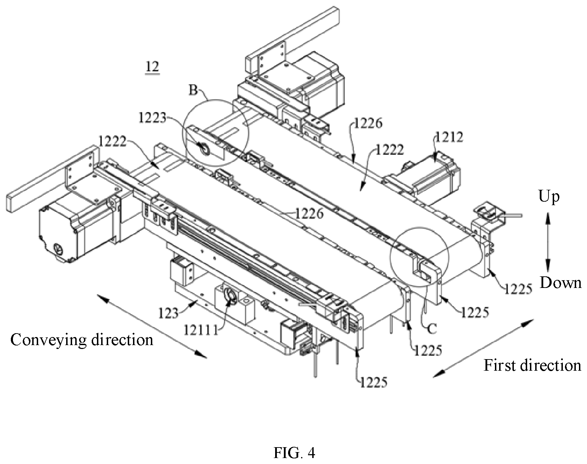

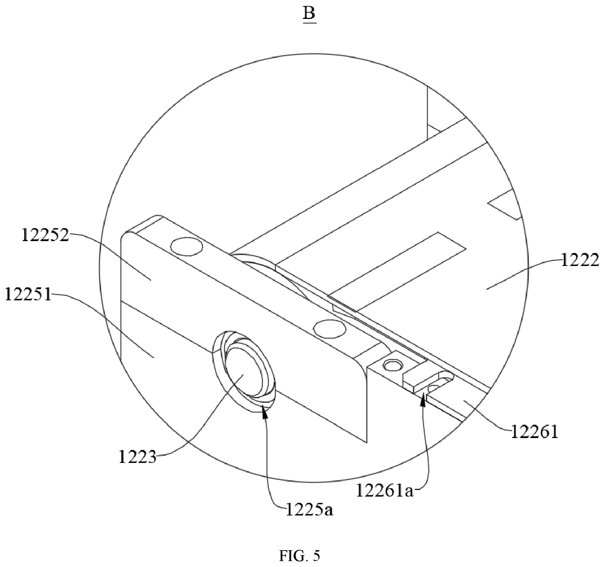

In an embodiment, referring to FIG. 4 and FIG. 5, the support seat 1225 includes a seat body 12251 and a cover body 12252 detachably connected. The seat body 12251 and the cover body 12252 together define a mounting hole 1225a. The shaft end of the first shaft 1223 is accommodated within the mounting hole 1225a. A wall surface of the mounting hole 1225a restricts the shaft end of the first shaft 1223 from escaping the support seat 1225, enabling the detachable connection of the shaft end of the first shaft 1223 to the support seat 1225. The seat body 12251 and the cover body 12252 are separate structures. When the first shaft 1223 needs to be removed, the cover body 12252 can be removed from the seat body 12251, that is, the first shaft 1223 can be taken out. The operation is simple and convenient.

The detachable connection between the cover body 12252 and the seat body 12251 includes but is not limited to screw connection or bolt connection.

In an embodiment, both the seat body 12251 and the cover body 12252 are formed with open slots. The open slot of the seat body 12251 and the open slot of the cover body 12252 are spliced together to form the mounting hole 1225a. That is, the shaft end of the first shaft 1223 is located within the two open slots, and the seat body 12251 and cover body 12252 together clamp the shaft end of the first shaft 1223. When the first shaft 1223 needs to be removed, the cover body 12252 can be removed from the seat body 12251, and the first shaft 1223 can be taken out from an opening of the open slot of the seat body 12251.

In an embodiment, referring to FIG. 4 and FIG. 5, the cover body 12252 is located above the seat body 12251. For example, the opening of the open slot of the seat body 12251 faces upward, and the opening of the open slot of the cover body 12252 faces downward. After the cover body 12252 is removed, the shaft end of the first shaft 1223 can remain in the open slot of the seat body 12251 below, so that during removal, an operator does not need to hold the first shaft 1223 by hands to assist with the removal, reducing the operational difficulty.

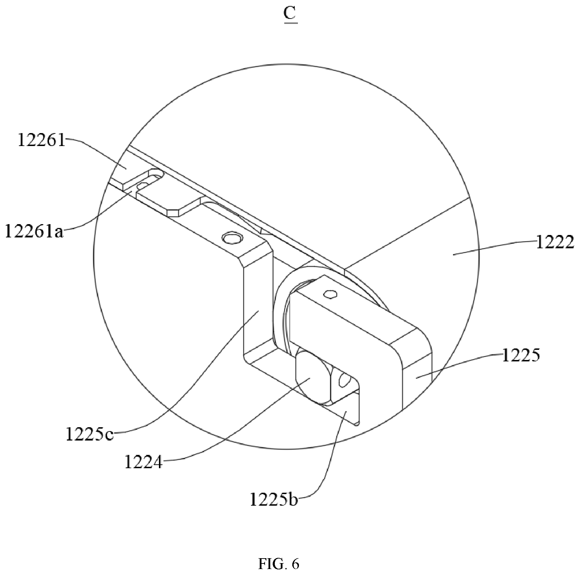

In an embodiment, referring to FIG. 4 and FIG. 6, the support seat 1225 is formed with a placement slot 1225b and an entry/exit slot 1225c. The placement slot 1225b extends along the conveying direction. The entry/exit slot 1225c extends upward from the placement slot 1225b and runs through an upper end surface of the support seat 1225. The shaft end of the second shaft 1224 is accommodated within the placement slot 1225b. A lower end of the entry/exit slot 1225c is in communication with the placement slot 1225b. The shaft end of the second shaft 1224 can enter or be removed from the placement slot 1225b along the entry/exit slot 1225c.

In this embodiment, a wall surface of the placement slot 1225b restricts the shaft end of the second shaft 1224 from escaping the placement slot 1225b, allowing the shaft end of the second shaft 1224 to be detachably connected to the support seat 1225. When the second shaft 1224 needs to be removed, the shaft end of the second shaft 1224 can be taken out through an upward opening of the entry/exit slot 1225c. When the shaft end of the second shaft 1224 needs to be assembled to the support seat 1225, the shaft end of the second shaft 1224 can be placed into the placement slot 1225b through the upward opening of the entry/exit slot 1225c. The operation is simple and convenient.

In an embodiment, the changeover conveying device 1 includes a tensioning screw. The tensioning screw is threadedly engaged with the base 1221, the tensioning screw is located on a side of the second shaft 1224 along the conveying direction, and the tensioning screw presses against or releases the second shaft 1224. Specifically, the axis of the tensioning screw extends along the conveying direction, and the tensioning screw rotates relative to the base 1221 to move toward or away from the second shaft 1224. The tensioning screw is configured to lock the second shaft 1224 within the placement slot 1225b, thereby tensioning the changeover conveying belt 1222. For example, the tensioning screw can be rotated, such that the tensioning screw moves away from the second shaft 1224, thereby releasing the second shaft 1224, allowing the second shaft 1224 to be taken out from the upward opening of the entry/exit slot 1225c, and making the changeover conveying belt 1222 in a relaxed state. The tensioning screw can be rotated, such that the tensioning screw moves toward and abuts against the second shaft 1224, thereby preventing the second shaft 1224 from moving within the placement slot 1225b, and making the changeover conveying belt 1222 in a tensioned state. Adjusting the second shaft 1224 with the tensioning screw serves to tension or relax the changeover conveying belt 1222. The tensioning screw has a simple structure and is easy to operate.

In an embodiment, referring to FIG. 2 to FIG. 6, the conveying mechanism 122 includes a support plate 1226 disposed horizontally. The support plate 1226 is inserted into the annular space of the changeover conveying belt 1222. A portion of the support plate 1226 protrudes from the changeover conveying belt 1222 along the first direction to form a connection portion 12261. A fastener is detachably inserted into the connection portion 12261 and the base 1221 along the vertical direction. That is, a projection of the connection portion 12261 on the horizontal plane is located on a side of a projection of the changeover conveying belt 1222 on the horizontal plane along the first direction.

In this embodiment, the support plate 1226 supports the changeover conveying belt 1222. The support plate 1226 is detachably connected to the base 1221 via a fastener, allowing the fastener to be removed from the vertical direction when the changeover conveying belt 1222 needs to be disassembled, avoiding interference from other structures. The operation is convenient. The support plate 1226 is first removed and taken out from the annular space, then the first shaft 1223 and the second shaft 1224 are removed, and the changeover conveying belt 1222 is finally taken out from the first shaft 1223 and the second shaft 1224, preventing the support plate 1226 from interfering with the quick assembly and disassembly of the changeover conveying belt 1222.

The type of the fastener includes but is not limited to a screw or a bolt.

For example, in an embodiment, referring to FIG. 5 and FIG. 6, the connection portion 12261 is formed with a mounting slot 12261a. The mounting slot 12261a runs through an outer peripheral edge of the connection portion 12261. The fastener is inserted into the mounting slot 12261a.

For example, a conveying motor can drive the first shaft 1223 to rotate, thereby driving the changeover conveying belt 1222 to rotate. The first conveying device 2 includes a first conveying belt. Each first conveying belt may correspond to at least one first conveying channel 21. The second conveying device 3 includes a second conveying belt. Each second conveying belt may correspond to at least one second conveying channel 31. The principle of conveying battery cells by the first conveying belt and the second conveying belt may be the same as the principle of conveying battery cells by the changeover conveying belt 1222. For example, both ends of the first conveying belt along the conveying direction are respectively provided with a driving shaft and a driven shaft in a penetrating manner. The conveying motor drives the driving shaft to rotate, causing the first conveying belt to rotate. The second conveying belt may have the same rotation principle and structure as the first conveying belt.

For example, in an embodiment, each first conveying belt corresponds to two first conveying channels 21. That is, each first conveying belt drives two rows of battery cells to move synchronously.

For example, in an embodiment, each second conveying belt corresponds to two second conveying channels 31. That is, each second conveying belt drives two rows of battery cells to move synchronously.

In an embodiment, referring to FIG. 1 to FIG. 4, the drive source 13 is connected to the support base 123 to drive the changeover table 12 to move along the first direction. The support base 123 is configured to support the drive mechanism 121 and the conveying mechanisms 122. The drive source 13 can drive the support base 123 to move the drive mechanism 121 and the conveying mechanisms 122 simultaneously along the first direction by a same distance. This facilitates the adaptation of the changeover conveying device 1 to different numbers of first conveying channels 21 and second conveying channels 31 upstream and downstream.

For example, in an embodiment, the number of first conveying channels 21 and the number of changeover conveying belts 1222 are each M. The number of second conveying channels 31 is K times the number of changeover conveying belts 1222. The second conveying device 3 includes K conveying motors. Each conveying motor correspondingly drives M second conveying channels 31. M and K are positive integers not less than 2. The M first conveying channels 21 can convey M rows of battery cells. M changeover conveying belts 1222 correspondingly convey M rows of battery cells. M*K second conveying channels 31 can convey M*K rows of battery cells.

In this embodiment, the M changeover conveying belts 1222 enable the transition of different numbers of channels among the M first conveying channels 21 and the M*K second conveying channels 31. In an example where the first conveying device 2 is located upstream and the second conveying device 3 is located downstream, the M rows of battery cells from the M first conveying channels 21 enter the M changeover conveying belts 1222. The drive source 13 drives the changeover table 12 to move along the first direction, and the M changeover conveying belts 1222 move together along the first direction, allowing positions of the M changeover conveying belts 1222 in the first direction to be changed to align with different second conveying channels 31. Thus, the M changeover conveying belts 1222 convey the M*K rows of battery cells in K batches to the M*K second conveying channels 31, completing the pairing between the changeover conveying belts 1222 and the second conveying channels 31. Then, the M*K second conveying channels 31 synchronously convey the M*K rows of battery cells to another downstream device. In this way, the changeover conveying belts 1222 enable the transition of different numbers of channels, improving the production capacity.

Referring to FIG. 1, FIG. 2, and FIG. 7, in an example where M and K are each 2, the number of first conveying channels 21 and the number of changeover conveying belts 1222 are each 2, and the number of second conveying channels 31 is 4. The second conveying device 3 includes two conveying motors. Each conveying motor correspondingly drives two second conveying channels 31 to rotate. The first conveying device 2 is located upstream, and the second conveying device 3 is located downstream, two rows of battery cells from the two first conveying channels 21 enter the two changeover conveying belts 1222. The drive source 13 drives the changeover table 12 to move along the first direction, and the two changeover conveying belts 1222 move together along the first direction, allowing positions of the two changeover conveying belts 1222 in the first direction to be changed to align with different second conveying channels 31. Thus, the two changeover conveying belts 1222 convey four rows of battery cells in two batches to the four second conveying channels 31, completing the pairing between the two changeover conveying belts 1222 and the four second conveying channels 31. Then, the four second conveying channels 31 synchronously convey the four rows of battery cells to another downstream device. In this way, the two changeover conveying belts 1222 enable the transition between two channels and four channels, improving the efficiency of the production line.

In an embodiment, the drive source 13 is a linear motor. The linear motor can drive the changeover table 12 to perform linear reciprocating motion along the first direction, efficiently and reliably changing the position of the changeover table 12 along the first direction, thereby adjusting the positions of all conveying mechanisms 122 in the first direction. The linear motor has the characteristics such as high movement precision and high operation efficiency. A controller can be configured to control the linear motor to operate and drive the changeover table 12 to move to a set position, achieving a high degree of automation.

For example, in an embodiment, the changeover conveying device 1 includes a controller. The changeover table 12 includes a plurality of position detection members and a plurality of sensing members. Each conveying mechanism 122 is provided with one sensing member. The plurality of position detection members are spaced apart on the support base 123 along the first direction. The position detection members are configured to sense the sensing members to obtain position information of the conveying mechanism 122. For example, there are two conveying mechanisms 122 and two sensing members. The number of position detection members is 5. Specifically, the power motor 1212 and the position detection members are all electrically connected to the controller. When a sensing member reaches a corresponding position detection member, the position detection member generates position information, and the controller controls the operation of the power motor 1212 based on the position information. In this disclosure, the power motor 1212 is used, and when a spacing between two adjacent conveying mechanisms 122 needs to be adjusted for battery cells of different models, a position of at least one position detection member in the first direction can be adjusted to adapt to battery cells of different models, reducing the difficulty of model changeover for the battery cells by the changeover conveying device 1. The precision is relatively high, and a limiting fixture for restricting the movement distances of the conveying mechanisms 122 along the first direction may be not needed, avoiding the issue of insufficient precision of the conveying mechanisms 122 after spacing adjustment due to insufficient precision of the limiting fixture.

The position detection members include but are not limited to slot-type photoelectric sensors.

The above embodiments are only used to illustrate the technical solutions of this disclosure and are not intended to limit this disclosure. Although this disclosure has been described in detail with reference to the foregoing embodiments, those of ordinary skill in the art should understand that modifications may be made to the technical solutions described in the foregoing embodiments, or equivalent substitutions may be made to some or all of the technical features thereof. Such modifications or substitutions do not cause the essence of the corresponding technical solutions to depart from the scope of the technical solutions of the embodiments of this disclosure. In particular, as long as there is no structural conflict, the technical features mentioned in the embodiments may be combined in any manner.

## Claims

1. A changeover conveying device, comprising:
a frame;
a changeover table disposed on the frame, wherein the changeover table comprises a drive mechanism, a support base, and a plurality of conveying mechanisms; the drive mechanism and the conveying mechanisms are all disposed on the support base; each conveying mechanism is configured to convey one row of items; the plurality of conveying mechanisms are arranged along a first direction; the drive mechanism comprises a reversing component and a power motor with a power shaft; the reversing component is connected to the power shaft and the conveying mechanisms; the power shaft rotates to enable the reversing component to drive the conveying mechanisms to move along the first direction; and the conveying mechanisms move along the first direction to change a distance between two adjacent conveying mechanisms along the first direction; and the first direction, a vertical direction, and a conveying direction are perpendicular to each other; and
a drive source connected to the support base to drive the changeover table to move along the first direction.

2. The changeover conveying device according to claim 1, wherein the reversing component comprises a lead screw and a plurality of nuts; the lead screw is connected to the power shaft; each nut is connected to one conveying mechanism; and the lead screw is threadedly engaged with the nuts.

3. The changeover conveying device according to claim 2, wherein at least two nuts have opposite thread directions.

4. The changeover conveying device according to claim 3, wherein the lead screw comprises a plurality of rod segments sequentially connected along the first direction; each rod segment is formed with an external thread adapted to one nut; and at least two rod segments have opposite external thread directions.

5. The changeover conveying device according to claim 4, wherein the plurality of rod segments are integrally formed to form the lead screw.

6. The changeover conveying device according to claim 4, wherein the plurality of rod segments are able to be welded to form the lead screw.

7. The changeover conveying device according to claim 2, wherein the lead screw is located below the conveying mechanism.

8. The changeover conveying device according to any one of claims 1 to 7, wherein the power motor is located on a side of the conveying mechanism along the first direction.

9. The changeover conveying device according to any one of claims 1 to 8, wherein the conveying mechanism comprises:
a base;
a changeover conveying belt;
a first shaft inserted into an annular space of the changeover conveying belt;
a second shaft inserted into the annular space of the changeover conveying belt, wherein the first shaft and the second shaft are respectively located at both ends of the changeover conveying belt along the conveying direction; and
two support seats disposed on the base, wherein the two support seats are respectively located on both sides of the changeover conveying belt along the first direction; a shaft end of the first shaft is detachably connected to the support seat; and a shaft end of the second shaft is detachably connected to the support seat.

10. The changeover conveying device according to claim 9, wherein the support seat comprises a seat body and a cover body detachably connected; the seat body and the cover body together define a mounting hole; and the shaft end of the first shaft is accommodated within the mounting hole.

11. The changeover conveying device according to claim 10, wherein the cover body is located above the seat body.

12. The changeover conveying device according to claim 9, wherein the support seat is formed with a placement slot and an entry/exit slot; the placement slot extends along the conveying direction; the entry/exit slot extends upward from the placement slot and runs through an upper end surface of the support seat; and the shaft end of the second shaft is accommodated within the placement slot.

13. The changeover conveying device according to claim 9, wherein the changeover conveying device comprises a tensioning screw; the tensioning screw is threadedly engaged with the base; the tensioning screw is located on a side of the second shaft along the conveying direction; and the tensioning screw presses against or releases the second shaft.

14. The changeover conveying device according to claim 9, wherein the conveying mechanism comprises a support plate disposed horizontally; the support plate is inserted into the annular space of the changeover conveying belt; a portion of the support plate protrudes from the changeover conveying belt along the first direction to form a connection portion; and a fastener is detachably inserted into the connection portion and the base along the vertical direction.

15. The changeover conveying device according to claim 14, wherein the connection portion is formed with a mounting slot; the mounting slot runs through an outer peripheral edge of the connection portion; and the fastener is inserted into the mounting slot.

16. The changeover conveying device according to any one of claims 1 to 15, wherein the drive source is a linear motor.

17. The changeover conveying device according to any one of claims 1 to 16, wherein two conveying mechanisms are provided; and the power shaft rotates to enable the reversing component to drive the two conveying mechanisms to move toward or away from each other along the first direction.

18. The changeover conveying device according to any one of claims 1 to 17, wherein the changeover conveying device comprises a controller; the changeover table comprises a plurality of position detection members and a plurality of sensing members; each conveying mechanism is provided with one sensing member; the plurality of position detection members are spaced apart on the support base along the first direction; and the position detection member is configured to sense the sensing member to obtain position information of the conveying mechanism.

19. A production line for producing batteries, comprising the changeover conveying device according to any one of claims 1 to 18.

20. The production line according to claim 11, comprising:
a first conveying device comprising at least one first conveying channel; and
a second conveying device comprising a plurality of second conveying channels, the number of first conveying channels is less than the number of second conveying channels; and the first conveying device and the second conveying device are respectively located upstream and downstream of the changeover conveying device.
